# EUROPEAN PATENT SPECIFICATION

(11) **EP 4 623 705 B1**
(45) Date of publication and mention of the grant of the patent: **01.04.2026**
(21) Application number: 24167508.1
(22) Date of filing: 28.03.2024
(51) Int. Cl.: A23N 4/20, A23N 7/00, B26D 3/26

(54) **MACHINE AND METHOD FOR AUTOMATICALLY PREPARING A WHOLE PINEAPPLE FOR CONSUMPTION AT A PINEAPPLE POINT OF SALE**
MASCHINE UND VERFAHREN ZUR AUTOMATISCHEN VORBEREITUNG EINER GANZEN ANANAS ZUM VERZEHR AN EINEM ANANAS-VERKAUFSORT
MACHINE ET MÉTHODE DE PRÉPARATION AUTOMATIQUE D'UN ANANAS ENTIER POUR LA CONSOMMATION À UN POINT DE VENTE D'ANANAS

(43) Date of publication of application: 01.10.2025
(73) Proprietor: SanLucar Fruit S.L.U., 46530 Puzol Valencia (ES)
(72) Inventor: Alvarez Ferrando, Carlos, 46021 Valencia (ES)
(74) Representative: Bernsmann, Falk

(56) References cited:
- EP-A1- 3 005 887
- WO-A1-91/07883
- CN-A- 111 955 757
- DE-U1- 202014 007 423
- GB-A- 1 569 019
- US-A- 4 108 059

## Description

### Technical Field

The present invention relates to a machine for automatically preparing a whole pineapple for consumption at a pineapple point of sale, the machine comprising a first processing station having a top knife for removing a top end of the pineapple and a bottom knife for removing a bottom end of the pineapple, wherein the top knife and the bottom knife have parallel cutting directions and parallel cutting planes, and the top knife is arranged at a distance measured perpendicularly to the cutting planes from the bottom knife; a length measuring device for measuring a length of the pineapple along the longitudinal axis of the pineapple; and an adjustment device for automatically adjusting the distance between the top knife and the bottom knife depending on the length of the pineapple measured by the length measuring device. The invention relates also to a method for automatically preparing a whole pineapple for consumption using the machine.

### Background Art

Machines for automatically preparing a whole pineapple for consumption at a pineapple point of sale are known from the publications WO 2014/184298 A1 and EP 3 623 122 A1. In these machines, a top end and a bottom end of the pineapple are removed by two horizontal knives arranged at a fixed distance from one another. If pineapples having a greater length than foreseen are processed by these machines, a significant amount of pulp is removed and wasted with the top and bottom ends.

In the pineapple processing machines disclosed in the publications WO 2020/055232 A1 and KR 10-1447372 B1, the distance between the horizontal blades can be adjusted manually to adapt the machines to pineapples of different lengths. The manual adjustment can reduce the amount of pulp wasted but requires a lot of manual work and is prone to errors. Furthermore, the manual adjustment cannot be done if the machines are used as self-service machines by untrained customers at a pineapple point of sale.

The publication GB 1 569 019 A describes a machine for automatically topping, tailing, coring and peeling pineapples in an industrial environment. The machine comprises a top-and-tailing station with two knives pulled towards one another by a spring. When a pineapple approaches the knives, its top and tail ends brush against guide bars connected to the knives by a parallelogram linkage. Therefore, the approaching pineapple pushes the guide bars apart so that the knives are spaced apart the correct distance for removing the correct amount from the ends of the pineapple. This mechanical adjustment requires many moveable parts, some of them in direct contact with the pineapple, making construction, maintenance, and cleaning of the machine complicated. Furthermore, the leaves of the pineapple must be removed before loading the pineapple into the machine for the mechanical adjustment to work properly. Therefore, the mechanical adjustment proposed by GB 1 569 019 A is not suitable for machines used as self-service machines by untrained customers at a pineapple point of sale. Further machines for automatic processing of pineapples are known from any of CN 111 955 757 A and WO 91/07883 A1.

### Technical Problem

The present invention solves the problem of providing a machine and a method for automatically preparing a whole pineapple for consumption, wherein the amount of wasted pulp is reduced, and the machine and the method can be used by untrained customers at a pineapple point of sale.

### Solution

The problem is solved by a machine according to claim 1 and by a method according to claim 12. Advantageous embodiments are subject of the dependent claims.

The machine is designed for automatically preparing a whole pineapple for consumption at a pineapple point of sale, preferably as a self-service machine to be used by untrained customers. According to the invention, the term "pineapple" is used for a pineapple fruit. According to the invention, a whole pineapple comprises the core of the pineapple, the pulp of the pineapple surrounding the core, the peel of the pineapple surrounding the pulp, and the leaves of the pineapple attached to a top end of the pineapple. A longitudinal axis of the pineapple is defined coaxial to the core of the pineapple. A bottom end of the pineapple, where the pineapple fruit was attached to a pineapple plant, lies opposite to the top end along the longitudinal axis.

According to the invention, the process of preparing a whole pineapple for consumption includes the steps of removing the top end of the pineapple, removing the bottom end of the pineapple, removing the peel of the pineapple, removing the core of the pineapple, cutting the pulp of the pineapple perpendicularly to the longitudinal axis of the pineapple into slices, and/or cutting the pulp of the pineapple along the longitudinal axis of the pineapple into segments.

The machine comprises a first processing station having a top knife for removing the top end of the pineapple and a bottom knife for removing the bottom end of the pineapple, wherein the top knife and the bottom knife have parallel cutting directions and parallel cutting planes, and the top knife is arranged at a distance measured perpendicularly to the cutting planes from the bottom knife. According to the invention, the cutting plane of a knife is the plane spanned by the cutting edge and the cutting direction of the knife.

For example, the knives are arranged to cut the ends of the pineapple with horizontal cutting edges in a horizontal cutting direction, and the top knife is arranged at the distance vertically above the bottom knife. For example, the knives are stationary with respect to a surrounding of the machine, and the machine comprises a first pusher for pushing the pineapple through the first processing station, thereby removing the ends of the pineapple with the stationary knives. For example, the pusher is arranged for pushing the pineapple in an upright orientation with the longitudinal axis of the pineapple oriented vertically, wherein the pushing direction is horizontal.

The machine preferably comprises a length measuring device for measuring a length of the pineapple along the longitudinal axis of the pineapple. According to the invention, the length of the pineapple does not include the leaves of the pineapple. Preferably, the length of the pineapple is the length over which the pineapple has a diameter that is large enough to be peeled by the machine automatically without leaving a part of the peel on the pineapple. Therefore, the length of the pineapple determines the maximum value the distance between the top knife and the bottom knife can be adjusted to for getting a maximum amount of pineapple flesh without any resides of pineapple peel. According to the invention, the length of the pineapple can be measured directly or indirectly, for instance by measuring a mass or a diameter of the pineapple and calculating the length, for example using a calibration function.

The machine preferably comprises an adjustment device for automatically adjusting the distance between the top knife and the bottom knife depending on the length of the pineapple measured by the length measuring device. By automatically adjusting the distance, the amount of pulp wasted by removing the top end and the bottom end is minimized without requiring any additional user interaction.

The length measuring device preferably comprises at least one optical sensor for measuring the length of the pineapple and/or a mass sensor for measuring a mass of the pineapple. Contrary to a direct mechanical length measurement as proposed by GB 1 569 019 A, measuring the length using an optical sensor or using a mass sensor and a correlation between the mass and the length of the pineapple is not impaired by the leaves of the pineapple and requires fewer moving parts touching the pineapple.

Consequently, the machine is simple in construction, cleaning and maintenance, and untrained customers can use the machine as a self-service machine at a pineapple point of sale for processing whole pineapples with their leaves still attached.

### Description of Embodiments

The adjustment device preferably comprises an adjustment motor for adjusting the distance between the top knife and the bottom knife. The adjustment motor can be arranged for adjusting a position of the top knife, of the bottom knife, or of both knives with respect to the surrounding of the machine. If the knives have a horizontal cutting plane, the adjustment motor preferably is arranged for adjusting a position of the top knife with respect to the surrounding of the machine. This way, the static bottom knife advantageously can be part of a horizontal support surface supporting the pineapple while being transferred from the first processing station to a subsequent processing station. Preferably, the adjustment motor is positioned above the top knife and the bottom knife to avoid the adjustment motor being contaminated by pieces or juice of the pineapple.

The adjustment device preferably comprises a controller, the controller being connected to the measuring device and to the adjustment motor for adjusting the distance using the adjustment motor depending on the length of the pineapple. The connection of the controller to the measuring device and to the adjustment motor can be a wired connection and/or a wireless connection. The controller preferably comprises a programmable logic controller and/or a computing unit, for example an embedded computing unit.

The at least one optical sensor preferably has a line of sight. For instance, the machine comprises at least one light emitter, preferably a laser emitter, emitting a light beam, preferably a laser beam, oriented along the line of sight, wherein the at least one optical sensor is configured to receive the light beam in transmission or in reflection and to detect the pineapple by a change in the intensity of the received light beam.

The machine preferably comprises a first pusher for pushing the pineapple across the line of sight in a pushing direction perpendicular to the longitudinal axis of the pineapple. For example, the pusher is arranged for pushing the pineapple in an upright orientation with the longitudinal axis of the pineapple oriented vertically, wherein the pushing direction is horizontal.

Preferably, the line of sight of the at least one optical sensor is oriented perpendicularly to the pushing direction and to the longitudinal axis of the pineapple. For example, the line of sight is oriented horizontally.

Preferably, the controller is programmed to control the first pusher and to calculate the length of the pineapple from a position of the first pusher when the at least one optical sensor starts detecting the pineapple within its line of sight. The controller can be programmed to calculate a position of a front side of the pineapple at one point of the longitudinal axis of the pineapple from the position of the optical sensor and the orientation of its line of sight, when the at least one optical sensor starts detecting the pineapple. The controller can be programmed to calculate a position of a back side of the pineapple at the same point of the longitudinal axis of the pineapple from the position of the pusher and its geometry. Therefore, the controller can be programmed to calculate a diameter of the pineapple at the one point of the longitudinal axis of the pineapple from the distance between the position of the front side and the position of the back side. The controller can be programmed to use the diameter of the pineapple at the one point of the longitudinal axis to calculate the length of the pineapple, for example using a calibration function.

The at least one optical sensor preferably comprises a plurality of optical sensors distributed on a parallel sensor axis parallel to the longitudinal axis of the pineapple, wherein the controller is programmed to calculate the length of the pineapple from a plurality of positions of the first pusher when the plurality of optical sensors start detecting the pineapple within their plurality of lines of sight. The controller can be programmed to calculate the diameter of the pineapple at a plurality of points of the longitudinal axis as explained before using the plurality of sensors. Consequently, the controller can be programmed to use the plurality of diameters to calculate the length of the pineapple with a higher precision, for example using a calibration function.

Preferably, the at least one optical sensor comprises at least one optical sensor arranged to detect a central region of the pineapple and at least one optical sensor, preferably at least two optical sensors, arranged to detect an end region of the pineapple.

The at least one optical sensor preferably comprises a sensor drive for moving the at least one optical sensor along a parallel sensor axis parallel to the longitudinal axis of the pineapple, wherein the controller is programmed to control the sensor drive and to calculate the length of the pineapple from a position of the first pusher and from positions of the at least one optical sensor when the at least one optical sensor starts and stops detecting the pineapple within its line of sight. The controller can be programmed to calculate a first diameter of the pineapple at a first point of the longitudinal axis from the position of the first pusher and an initial position of the optical sensor when the at least one optical sensor starts detecting the pineapple as explained above. Then, the controller can be programmed to move the optical sensor along the parallel sensor axis until the sensor stops detecting the pineapple. The controller can be programmed to calculate a position of the front side of the pineapple at a second point on the longitudinal axis from the position of the optical sensor when it stops detecting the pineapple. The controller can be programmed to calculate a diameter of the pineapple at the second point of the longitudinal axis from the position of the front side and from a position of the back side of the pineapple determined as before from the position and geometry of the pusher. The controller can be programmed to calculate the length of the pineapple with an increased precision from the first diameter and the second diameter, for example using a calibration function.

The at least one optical sensor preferably comprises a sensor drive for moving the at least one optical sensor along an orthogonal sensor axis orthogonal to the longitudinal axis of the pineapple and/or for rotating the at least one optical sensor about a parallel sensor axis parallel to the longitudinal axis of the pineapple, wherein the controller is programmed to control the sensor drive and to calculate the length of the pineapple from a line scan of the pineapple recorded by the at least one optical sensor.

The at least one optical sensor preferably comprises a plurality of optical sensors distributed on an orthogonal sensor axis orthogonal to the longitudinal axis of the pineapple, wherein the controller is programmed to calculate the length of the pineapple from a line scan of the pineapple recorded by the plurality of optical sensors.

The controller can be programmed to calculate a diameter of the pineapple at one point on the longitudinal axis from a difference between the positions of the front side and the back side of the pineapple detected in the line scan and from the position(s) of the optical sensor(s). The controller can be programmed to calculate the length of the pineapple from its diameter at the one point on the longitudinal axis, for example using a calibration function.

Additionally, the sensor drive may be arranged for moving the at least one optical sensor along the parallel sensor axis and/or the at least one optical sensor may comprise a plurality of lines of optical sensors distributed on the parallel sensor axis for recording a plurality of line scans of the pineapple at a plurality of points on the longitudinal axis. Consequently, the controller can be programmed to calculate a plurality of diameters of the pineapple at the plurality of points on the longitudinal axis. The controller can be programmed to calculate the length of the pineapple from its diameters at the plurality of points on the longitudinal axis with higher precision, for example using a calibration function.

The at least one optical sensor preferably comprises a camera for recording an image of the pineapple. Preferably the controller is programmed to calculate the length of the pineapple from the image of the pineapple. For example, the controller is programmed to execute a machine vision algorithm and/or a computer vision algorithm for recognising and/or measuring the pineapple in the image.

The mass sensor preferably comprises an electronic mass sensor for measuring the mass of the pineapple. For example, the electronic mass sensor is integrated in a support element for supporting the pineapple before the pineapple is transported through the first processing station, for example by a first pusher.

Preferably, the controller is programmed to calculate the length of the pineapple from the mass of the pineapple, for example using a calibration function based on a correlation between mass and length of the pineapple.

The mass sensor preferably comprises a support element for supporting the pineapple with its longitudinal axis oriented vertically. For instance, the machine is designed to enable the user to place the whole pineapple on the support element. Preferably, the machine comprises a guide element, such as a guide sleeve, to make sure that the pineapple is placed on the support element with its longitudinal axis oriented vertically, i.e. in an upright position.

Preferably the support element is carried by at least one spring element, such as a coil spring, a gas pressure spring and/or a suspension strut; wherein the at least one spring element is elastically deformable in a vertical direction by a weight of the pineapple acting on the support element. For example, the at least one spring element is positioned below the support element and vertically compressible by the weight of the pineapple.

Preferably, the bottom knife is fixed to the support element, wherein the top knife is arranged vertically above the bottom knife at a fixed position. Consequently, the weight of the pineapple urges the support element and the bottom knife fixed to the support element downwards against the elastic recoil force of the spring element. Thus, a long pineapple having a high mass descends the bottom knife to a lower position further away from the top knife than a short pineapple having a small mass. Therefore, the distance between the top knife and the bottom knife is adjusted automatically depending on the length of the pineapple. Advantageously, the measurement and adjustment can be done without any electric, electronic or motorised components in this embodiment leading to a particularly energy efficient and robust machine.

The machine preferably comprises a second processing station for removing the core and/or the peel of the pineapple after removal of the top end and the bottom end of the pineapple by the first processing station. For example, the longitudinal axis of the pineapple is oriented vertically during the removal of the core and of the peel. The second processing station preferably comprises two circular blades arranged concentrically for simultaneously separating the core and the peel from the pulp of the pineapple. For example, the second processing station comprises a axial pusher for pushing the pineapple along its longitudinal axis through a space between the circular blades while the circular blades are stationary with respect to the surrounding of the machine.

The second processing station preferably comprises a mobile support element supporting the pineapple while the pineapple is driven through the space between the circular blades. Preferably, the mobile support element is attached to the axial pusher at a fixed distance from the axial pusher so that the pineapple without its top end and bottom end can be placed between the axial pusher and the mobile support element. Preferably, the distance between the mobile support element and the axial pusher corresponds to the maximum distance between the top knife and the bottom knife of the first processing station of the machine. The mobile support element preferably has recesses for the circular blades. Consequently, the circular blades can be concealed in the recesses so that the circular blades do not hinder the placement of the pineapple on the mobile support element, for instance by pushing the pineapple in a horizontal direction onto the mobile support element.

In another example, the second processing station comprises a blade drive for driving the circular blades through the pineapple along its longitudinal axis while the pineapple is stationary with respect to the surrounding of the machine. For instance, the pineapple is supported by a support surface while the circular blades are driven through the pineapple.

The machine preferably comprises a first pusher for pushing the pineapple on a first horizontal plane through the first processing station. The machine preferably comprises a first support surface supporting the pineapple while being pushed by the first pusher. The first support surface may be solid or comprise a number of holes. For example, the first support surface is formed by at least two rails supporting the pineapple. The first pusher may be designed for pushing the pineapple along a linear or curved path, preferably along a segment of a circular path.

The machine preferably comprises a third processing station for cutting the pineapple into a plurality of slices orthogonally to the longitudinal axis of the pineapple and/or into a plurality of segments along the longitudinal axis after removal of the core and/or the peel of the pineapple by the second processing station.

The third processing station preferably comprises a plurality of, preferably four, five, six or seven, slicing knives having parallel cutting directions and parallel cutting planes. The slicing knives are preferably arranged at equal distances from one another, for example at a distance of 15 mm to 25 mm, preferably 20 mm, from one another. Preferably, the cutting directions and cutting planes of the slicing knives are oriented horizontally. Preferably, the slicing knives are stationary with respect to the surrounding of the machine, and the machine comprises a second pusher for pushing the pineapple, preferably in a horizontal direction, through spaces between the stationary slicing knives. The second pusher preferably comprises a number of fingers corresponding to the number of spaces between the slicing knives wherein each finger is arranged for pushing one slice of the pineapple through a space between two adjacent slicing knives further into the third processing station.

Preferably, the distance between the top knife and the bottom knife is adjustable in steps to integer multiples of to the distance between two adjacent slicing knives. This has the advantage that independent of the length of the pineapple, the machine prepares a plurality of slices of equal thickness making consumption of the slices easier. For instance, the distance between the top knife and the bottom knife is adjustable to four, five, six and/or seven times the distance between two adjacent slicing knives.

The third processing station preferably comprises a segmenting knife having a shaft arranged in parallel to the longitudinal axis of the pineapple and a plurality of, preferably six, eight or ten, flat blades arranged radially on the shaft. The blades are preferably arranged at equal angular intervals from one another around the shaft. The machine preferably comprises a knife drive for driving the segmenting knife along the longitudinal axis of the pineapple into the pineapple, wherein the shaft of the segmenting knife preferably enters a hole in the pineapple left by the core of the pineapple that was previously removed by the second processing station.

The machine preferably comprises a second pusher for pushing the pineapple on a second horizontal plane arranged below the first horizontal plane into the third processing station. For example, the second horizontal plane is arranged by at least once, preferably once to twice, a maximum distance between the top knife and the bottom knife below the first horizontal plane allowing for an unhindered movement of a second pusher between the first horizontal plane and the second horizontal plane.

The machine preferably comprises a second support surface supporting the pineapple while being pushed by the second pusher. The second support surface may be solid or comprise a number of holes. For example, the second support surface is formed by at least two rails supporting the pineapple. The second pusher may be designed for pushing the pineapple along a linear or curved path, preferably along a segment of a circular path.

The pineapple may be transferred from the first horizontal plane to the second horizontal plane before or behind the second processing station in the direction of movement of the pineapple, preferably through a drop hole. The pineapple may be transferred from the first horizontal plane to the second horizontal plane in the second processing station, preferably by pushing the pineapple vertically through the space between the circular blades of the second processing station.

By designing the machine with two pushers, each of the pushers can be adapted individually to the properties of the pineapple during the processing steps served by the respective pusher. For example, the first pusher can be optimised for securely holding the whole pineapple, while the second pusher can be optimised for securely holding the pineapple having a smaller diameter and a more slippery surface after removal of the peel. Furthermore, the second pusher may comprise a number of fingers for passing between the slicing knives of the third processing station while the first pusher may be of a simpler, solid design. Arranging the two pushers on different horizontal planes has the advantage that a movement of one pusher is not hindered by the other pusher.

The machine preferably comprises a first horizontal shutter, wherein the first pusher is arranged for pushing the pineapple on the first horizontal plane onto the first horizontal shutter, wherein the first horizontal shutter is arranged for dropping the pineapple from the first horizontal plane onto the second horizontal plane by opening the first horizontal shutter.

The first horizontal shutter may be arranged before or behind the second processing station in the direction of movement of the pineapple, preferably above a drop hole. The first horizontal shutter allows for a timely coordination of the pineapple falling to the second horizontal plane and a movement of the second pusher. Furthermore, the first horizontal shutter prevents the pineapple from tumbling when falling to the second horizontal plane.

The first horizontal shutter may be arranged in the second processing station, preferably above the circular blades of the second processing station. The first horizontal shutter prevents the pineapple from getting stuck between the circular blades due to a misalignment of the longitudinal axis of the pineapple with a pushing direction of the axial pusher pushing the pineapple through the space between the circular blades.

The machine preferably comprises a second horizontal shutter, wherein the second pusher is arranged for pushing the pineapple on the second horizontal plane onto the second horizontal shutter, wherein the second horizontal shutter is arranged for dropping the pineapple from the second horizontal plane into a recipient for removing the pineapple from the machine.

Preferably, the second horizontal shutter is arranged in the third processing station, preferably below the segmenting knife of the third processing station. The second horizontal shutter can maintain the pineapple on the surface of the closed shutter while it is processed in the third processing station. Once the processing is completed, the shutter can be opened to release the processed pineapple into the recipient placed below the second horizontal shutter. The machine preferably comprises a sensor, for instance an optical sensor, for automatic verification whether a recipient is properly placed under the second horizontal shutter before opening the shutter.

The first and/or second horizontal shutter is operated, for instance, by the first and/or second pusher pushing the pineapple onto the shutter. For example, the machine comprises at least one spring element biasing the first and/or second horizontal shutter into the open position. Preferably, the first and/or second pusher comprises at least one actuator moving the first and/or second horizontal shutter against a recoil force of the respective spring element into the closed position, when the pusher pushes the pineapple onto the shutter. When the pineapple shall be released, the first and/or second pusher can be retreated thereby releasing the first and/or second horizontal shutter so that the recoil force of the respective spring element returns the shutter to the open position.

Preferably, the top knife is arranged vertically above the bottom knife, wherein a vertical height of the first pusher is smaller than a vertical height of the second pusher. If the top knife is arranged above the bottom knife, the pineapple is processed with its longitudinal axis oriented vertically in an upright position by the first processing station and preferably also by the subsequent processing stations. If the distance between the top knife and the bottom knife is adjustable, the first pusher must be small enough to pass between the top knife and the bottom knife at their smallest distance.

On the other hand, the second pusher preferably has a height corresponding to the largest distance between the top knife and the bottom knife so that the second pusher can push all slices of the pineapple created by the slicing knives of the third processing station further into the third processing station even for the biggest pineapples being processed. Consequently, it is preferable that a vertical height of the first pusher is smaller than a vertical height of the second pusher.

The machine preferably comprises a common pusher drive for driving the first pusher and the second pusher making the design of the machine very simple. Preferably, each of the first pusher and the second pusher pushes the pineapple over a segment of a circle, wherein the common pusher drive comprises a common pusher drive shaft driving the first pusher and the second pusher.

Preferably, the first pusher and the second pusher are fixed to the common pusher drive shaft, wherein the second pusher may be arranged exactly below the first pusher or at an angular position behind the first pusher in the direction of movement of the pineapple. Positioning the second pusher slightly behind the first pusher has the advantage that the pineapple does not fall on the second pusher when falling from the first horizontal plane to the second horizontal plane in case there is not first horizontal shutter preventing the pineapple from falling immediately.

In other embodiments, the first pusher is arranged at an angular position behind the second pusher in the direction of movement of the pineapple. This has the advantage of avoiding a collision between the first pusher and the segmenting knife of the third processing station. To avoid the pineapple falling on the second pusher when falling from the first horizontal plane to the second horizontal plane, the pushers must move back against the direction of movement of the pineapple before the pineapple falls. The moment when the pineapple falls can be determined, for example, by opening the first horizontal shutter.

The invention relates to a method for automatically preparing a whole pineapple for consumption at a pineapple point of sale, preferably using a machine according to the invention. Definitions, features, and benefits described in the context of the machine apply *mutatis mutandis* to the method.

The method preferably comprises a step of measuring a length of the pineapple along the longitudinal axis of the pineapple using a length measuring device of the machine, wherein measuring the length comprises measuring the length using at least one optical sensor and/or measuring a mass of the pineapple using a mass sensor.

The method preferably comprises a step of automatically adjusting the distance between a top knife and a bottom knife of a first processing station of the machine depending on the measured length of the pineapple using an adjustment device of the machine. Preferably, the distance between the top knife and the bottom knife is adjusted to an integer multiple of a distance between adjacent slicing knives of a third processing station of the machine.

The method preferably comprises a step of removing a top end of the pineapple using the top knife and removing a bottom end of the pineapple using the bottom knife. Preferably, the top end and the bottom end are removed by pushing the pineapple through a space between the top knife and the bottom knife, preferably in a horizontal direction.

The machine preferably comprises an adjustment motor for adjusting the distance between the top knife and the bottom knife and a controller connected to the measuring device and to the adjustment motor. The step of measuring the length of the pineapple preferably comprises the controller measuring the length using the measuring device, wherein the step of automatically adjusting the distance comprises the controller adjusting the distance using the adjustment motor depending on the length of the pineapple.

The length measuring device preferably comprises at least one optical sensor having a line of sight. The method preferably comprises a step of the controller controlling a first pusher for pushing the pineapple across the line of sight in a, preferably horizontal, pushing direction perpendicular to the, preferably vertical, longitudinal axis of the pineapple and perpendicular to the, preferably horizontal, line of sight. The step of measuring the length of the pineapple preferably comprises the controller calculating the length of the pineapple from a position of the first pusher when the at least one optical sensor starts detecting the pineapple within its line of sight, for instance as explained above..

The at least one optical sensor preferably comprises a plurality of optical sensors distributed on a parallel sensor axis parallel to the longitudinal axis of the pineapple. The step of measuring the length of the pineapple preferably comprises the controller calculating the length of the pineapple from a plurality of positions of the first pusher when the plurality of optical sensors start detecting the pineapple within their plurality of lines of sight, for instance as explained above.

The at least one optical sensor preferably comprises a sensor drive for moving the at least one optical sensor along a parallel sensor axis parallel to the longitudinal axis of the pineapple. The step of measuring the length of the pineapple preferably comprises the controller controlling the sensor drive and calculating the length of the pineapple from a position of the first pusher and from positions of the at least one optical sensor when the at least one optical sensor starts and stops detecting the pineapple within its line of sight, for instance as explained above.

The at least one optical sensor preferably comprises a sensor drive for moving the at least one optical sensor along an orthogonal sensor axis orthogonal to the longitudinal axis of the pineapple and/or for rotating the at least one optical sensor about a parallel sensor axis parallel to the longitudinal axis of the pineapple. The step of measuring the length of the pineapple preferably comprises the controller controlling the sensor drive and calculating the length of the pineapple from a line scan of the pineapple recorded by the at least one optical sensor, for example as explained above.

The at least one optical sensor preferably comprises a plurality of optical sensors distributed on an orthogonal sensor axis orthogonal to the longitudinal axis of the pineapple. The step of measuring the length of the pineapple preferably comprises the controller calculating the length of the pineapple from a line scan of the pineapple recorded by the plurality of optical sensors, for instance as explained above.

The length measuring device preferably comprises a mass sensor; wherein the mass sensor comprises an electronic mass sensor. The step of measuring the length of the pineapple preferably comprises the controller measuring the mass of the pineapple using the electronic mass sensor. The step of measuring the length of the pineapple preferably comprises the controller calculating the length of the pineapple from the mass of the pineapple, for example using a calibration function based on a correlation between mass and length of the pineapple.

### Brief Description of Drawings

The following description and drawings of various embodiments of the present invention are presented for purposes of illustration but are not intended to be exhaustive or limited to the embodiments disclosed.
Figure 1 shows an embodiment of the first processing station of a machine according to the invention.
Figure 2 shows a different view of the first processing station of figure 1.
Figure 3 shows a first embodiment of the second processing station of a machine according to the invention.
Figure 4 shows a second embodiment of the second processing station of a machine according to the invention.
Figure 5 shows a third embodiment of the second processing station of a machine according to the invention.
Figure 6 shows an overview of a machine according to the invention.

### Fig.1

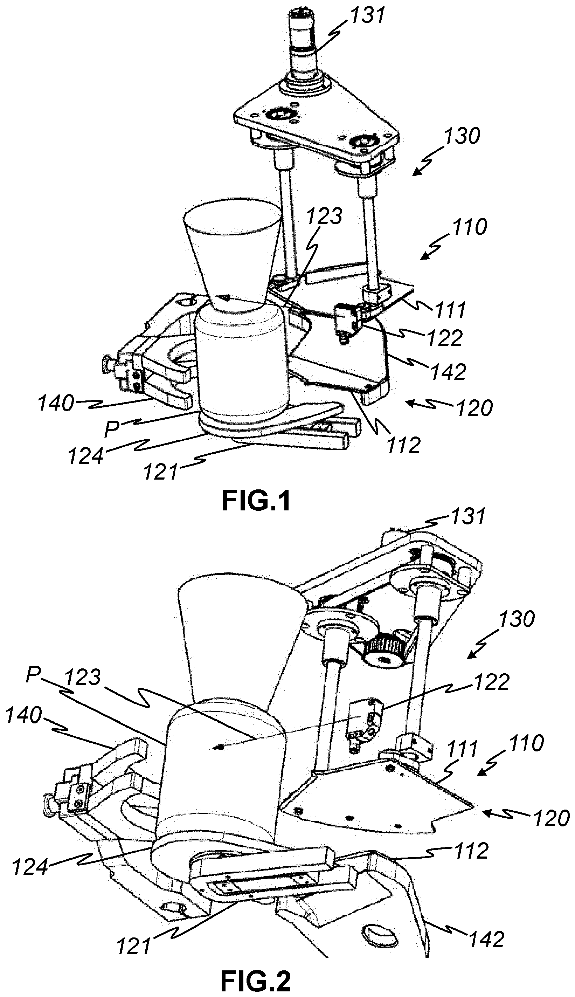

Figure 1 shows an embodiment of the first processing station 110 of a machine according to the invention.

The first processing station 110 comprises a top knife 111 for removing a top end of a pineapple P and a bottom knife 112 for removing a bottom end of the pineapple P, wherein the top knife 111 and the bottom knife 112 have parallel cutting directions and parallel cutting planes, and the top knife 111 is arranged at a distance measured perpendicularly to the cutting planes from the bottom knife 112. Preferably, the cutting directions and the cutting planes are horizontal.

In the embodiment shown, the top knife 111 and the bottom knife 112 are stationary with respect to a surrounding of the machine, and the machine comprises a first pusher 140 for pushing the pineapple P through the first processing station 110, thereby removing the ends of the pineapple P with the stationary top knife 111 and bottom knife 112.

Before being pushed through the first processing station 110, the pineapple P is placed by a user of the machine on a support element 124, for example. The bottom knife 112 is connected to a first support surface 142 for supporting the pineapple P when it is pushed with the first pusher 140 from the first processing station 110 to further processing stations, for instance.

The machine comprises a length measuring device 120 for measuring a length of the pineapple P along a longitudinal axis of the pineapple P and an adjustment device 130 for automatically adjusting the distance between the top knife 111 and the bottom knife 112 depending on the length of the pineapple P measured by the length measuring device 120.

The adjustment device 130 comprises an adjustment motor 131 for adjusting the distance between the top knife 111 and the bottom knife 112, for instance by vertically moving the top knife 111. The adjustment device 130 comprises a controller (not shown) being connected to the measuring device 120 and to the adjustment motor 131 for adjusting the distance using the adjustment motor 131 depending on the length of the pineapple P.

The length measuring device 120 comprises an optical sensor 122 for measuring the length of the pineapple P and a mass sensor 121 for measuring a mass of the pineapple P.

The mass sensor 121 is connected to the support element 124, for example.

The optical sensor 122 has a line of sight 123, wherein the first pusher 140 is configured for pushing the pineapple P across the line of sight 123 in a - preferably horizontal - pushing direction perpendicular to the longitudinal axis of the pineapple P, wherein the line of sight 123 is oriented perpendicularly to the pushing direction and to the longitudinal axis of the pineapple P.

The controller is programmed to control the first pusher 140 and to calculate the length of the pineapple P from a position of the first pusher 140 when the optical sensor 122 starts detecting the pineapple P within its line of sight 123 and from the mass of the pineapple P measured by the mass sensor 121.

### Fig.2

Figure 2 shows a different view of the first processing station 110 of figure 1.

### Fig.3

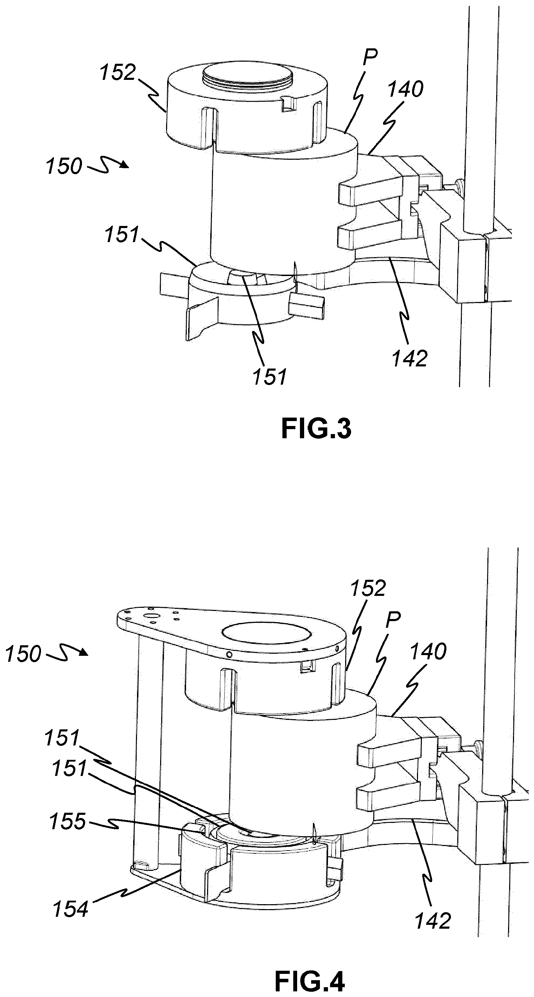

Figure 3 shows a first embodiment of the second processing station 150 of a machine according to the invention. Additionally, figure 3 shows the first pusher 140 for pushing the pineapple P on the first support surface 142, for example in a horizontal direction, into the second processing station 150.

The second processing station comprises two circular blades 151 arranged concentrically for simultaneously separating the core and the peel from the pulp of the pineapple P. In the embodiment shown in figure 3, the second processing station 150 comprises an axial pusher 152 for pushing the pineapple P along its longitudinal axis, for instance vertically downwards, through a space between the circular blades 151 while the circular blades 151 are stationary with respect to the surrounding of the machine.

### Fig.4

Figure 4 shows a second embodiment of the second processing station 150 of a machine according to the invention.

In addition to the features shown in figure 3, the second processing station 150 shown in figure 4 comprises a mobile support element 154 supporting the pineapple P while the pineapple P is driven through the space between the circular blades 151. For instance, the mobile support element 154 is attached to the axial pusher 152 at a fixed distance from the axial pusher 152 so that the pineapple P without its top end and bottom end can be placed between the axial pusher 152 and the mobile support element 154.

The mobile support element 154 has recesses 155 for the circular blades 151. Consequently, the circular blades 151 can be concealed in the recesses 155 so that the circular blades 151 do not hinder the placement of the pineapple P on the mobile support element 154, for example by pushing the pineapple P in a horizontal direction onto the mobile support element 154.

### Fig.5

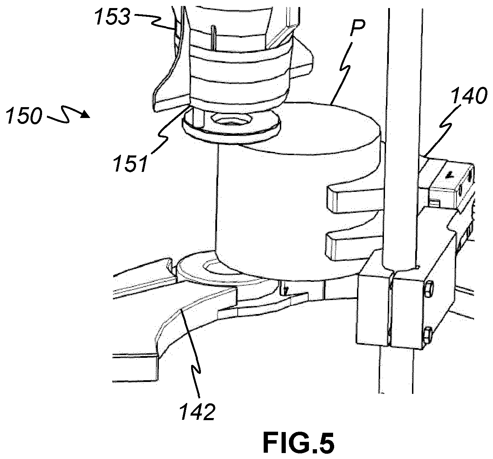

Figure 5 shows a third embodiment of the second processing station 150 of a machine according to the invention.

Instead of an axial pusher as shown in figures 3 and 4, the second processing station 150 shown in figure 5 comprises a blade drive 153 for driving the circular blades 151 through the pineapple P along its longitudinal axis, for example vertically downwards, while the pineapple P is stationary with respect to the surrounding of the machine. For instance, the pineapple P is supported by the first support surface 142 while the circular blades 151 are driven through the pineapple P.

### Fig.6

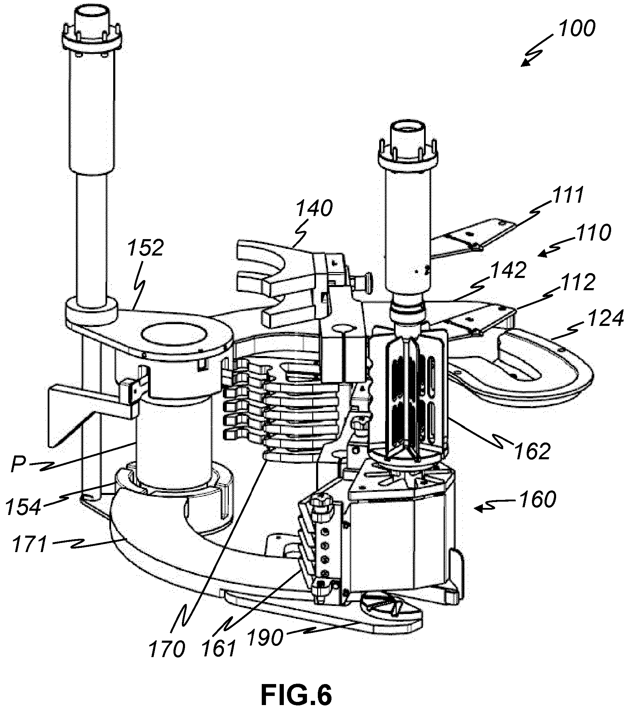

Figure 6 shows an overview of an embodiment of a machine 100 according to the invention.

The embodiment of the machine 100 shown in figure 6 comprises a support element 124, a first processing station 110 and a first pusher 140 for pushing the pineapple P on a first horizontal plane, for instance on the first support surface 142, through the first processing station 110 as shown in figures 1 and 2. Furthermore, the machine 100 comprises a second processing station 150 as shown in figure 4.

Additionally, the machine 100 comprises a third processing station 160 for cutting the pineapple P into a plurality of slices orthogonally to the longitudinal axis of the pineapple P and/or into a plurality of segments along the longitudinal axis after removal of the core and/or the peel of the pineapple P by the second processing station 150, and a second pusher 170 for pushing the pineapple P on a second horizontal plane, for instance on a second support surface 170, arranged below the first horizontal plane into the third processing station 160.

The machine comprises a horizontal shutter 190, being movable between a closed position holding the pineapple P above a recipient (not shown) for taking the pineapple P out of the machine 100 and an open position (shown in figure 6) letting the pineapple P fall into the recipient.

The cutting station 160 comprises five slicing knives 161 having parallel cutting directions and parallel cutting planes. The cutting directions and cutting planes of the slicing knives 161 are oriented horizontally, for example. The slicing knives 161 are stationary with respect to the surrounding of the machine 100, and the second pusher 170 is designed for pushing the pineapple P, for instance in a horizontal direction, through spaces between the stationary slicing knives 161.

The cutting station 160 comprises a segmenting knife 162 for cutting the pineapple P along a vertical axis into pineapple segments, while the pineapple P is placed on the horizontal shutter 190. In figure 6, the segmenting knife 162 is shown in a position retracted from the horizontal shutter 190.

**Reference Signs List**

| | | | |
|---|---|---|---|
| 100 | machine | 150 | second processing station |
| 110 | first processing station | 151 | circular blade |
| 111 | top knife | 152 | axial pusher |
| 112 | bottom knife | 153 | blade drive |
| 120 | length measuring device | 154 | mobile support element |
| 121 | mass sensor | 155 | recess |
| 122 | optical sensor | 160 | third processing station |
| 123 | line of sight | 161 | slicing knife |
| 124 | support element | 162 | segmenting knife |
| 130 | adjustment device | 170 | second pusher |
| 131 | adjustment motor | 171 | second support surface |
| 140 | first pusher | 190 | horizontal shutter |
| 142 | first support surface | P | pineapple |

## Claims

1. A machine (100) for automatically preparing a whole pineapple (P) for consumption at a pineapple point of sale, the machine (100) comprising
a. a first processing station (110) having a top knife (111) for removing a top end of the pineapple (P) and a bottom knife (112) for removing a bottom end of the pineapple (P), wherein the top knife (111) and the bottom knife (112) have parallel cutting directions and parallel cutting planes, and the top knife (111) is arranged at a distance measured perpendicularly to the cutting planes from the bottom knife (112);
b. a length measuring device (120) for measuring a length of the pineapple (P) along a longitudinal axis of the pineapple (P); and
c. an adjustment device (130) for automatically adjusting the distance between the top knife (111) and the bottom knife (112) depending on the length of the pineapple (P) measured by the length measuring device (120);
**characterized in that**
d. the length measuring device (120) comprises at least one optical sensor (122) for measuring the length of the pineapple (P) and/or a mass sensor (121) for measuring a mass of the pineapple (P).

2. The machine (100) according to claim 1,
wherein the adjustment device (130) comprises
a. an adjustment motor (131) for adjusting the distance between the top knife (111) and the bottom knife (112); and
b. a controller, the controller being connected to the measuring device (120) and to the adjustment motor (131) for adjusting the distance using the adjustment motor (131) depending on the length of the pineapple (P).

3. The machine (100) according to claim 2,
a. wherein the length measuring device (130) comprises at least one optical sensor (122) having a line of sight (123);
b. wherein the machine (100) comprises a first pusher (140) for pushing the pineapple (P) across the line of sight (123) in a pushing direction perpendicular to the longitudinal axis of the pineapple (P);
c. wherein the line of sight (123) is oriented perpendicularly to the pushing direction and to the longitudinal axis of the pineapple (P);
d. wherein the controller is programmed to control the first pusher (140) and to calculate the length of the pineapple (P) from a position of the first pusher (140) when the at least one optical sensor (122) starts detecting the pineapple (P) within its line of sight (123).

4. The machine (100) according to claim 3,
wherein the at least one optical sensor (122)
a. comprises a plurality of optical sensors (122) distributed on a parallel sensor axis parallel to the longitudinal axis of the pineapple (P), wherein the controller is programmed to calculate the length of the pineapple (P) from a plurality of positions of the first pusher (140) when the plurality of optical sensors (122) start detecting the pineapple (P) within their plurality of lines of sight (123); and/or
b. comprises a sensor drive for moving the at least one optical sensor (122) along a parallel sensor axis parallel to the longitudinal axis of the pineapple (P), wherein the controller is programmed to control the sensor drive and to calculate the length of the pineapple (P) from a position of the first pusher (140) and from positions of the at least one optical sensor (122) when the at least one optical sensor (122) starts and stops detecting the pineapple (P) within its line of sight (123).

5. The machine (100) according to one of claims 2 to 4, wherein the length measuring device (130) comprises at least one optical sensor (122);
a. wherein the at least one optical sensor (122) comprises a sensor drive for moving the at least one optical sensor (122) along an orthogonal sensor axis orthogonal to the longitudinal axis of the pineapple (P) and/or for rotating the at least one optical sensor (122) about a parallel sensor axis parallel to the longitudinal axis of the pineapple (P), wherein the controller is programmed to control the sensor drive and to calculate the length of the pineapple (P) from a line scan of the pineapple (P) recorded by the at least one optical sensor (122); and/or
b. wherein the at least one optical sensor (122) comprises a plurality of optical sensors (122) distributed on an orthogonal sensor axis orthogonal to the longitudinal axis of the pineapple (P), wherein the controller is programmed to calculate the length of the pineapple (P) from a line scan of the pineapple (P) recorded by the plurality of optical sensors (122).

6. The machine (100) according to one of claims 2 to 5,
a. wherein the length measuring device (130) comprises a mass sensor (121);
b. wherein the mass sensor (121) comprises an electronic mass sensor for measuring the mass of the pineapple (P),
c. wherein the controller is programmed to calculate the length of the pineapple (P) from the mass of the pineapple (P).

7. The machine (100) according to one of claims 1 to 6,
a. wherein the length measuring device (130) comprises a mass sensor (121);
b. wherein the mass sensor (121) comprises a support element (124) for supporting the pineapple (P) with its longitudinal axis oriented vertically,
c. wherein the support element (124) is carried by at least one spring element,
d. wherein the at least one spring element is elastically deformable in a vertical direction by a weight of the pineapple (P) acting on the support element (124),
e. wherein the bottom knife (112) is fixed to the support element (124),
f. wherein the top knife (111) is arranged vertically above the bottom knife (112).

8. The machine (100) according to one of claims 1 to 7, wherein the machine (100) comprises
a. a second processing station (150) for removing a core and/or a peel of the pineapple (P) after removal of the top end and the bottom end of the pineapple (P) by the first processing station (110),
b. a first pusher (140) for pushing the pineapple (P) on a first horizontal plane through the first processing station (110),
c. a third processing station (160) for cutting the pineapple (P) into a plurality of slices orthogonally to the longitudinal axis of the pineapple (P) and/or into a plurality of segments along the longitudinal axis after removal of the core and/or the peel of the pineapple (P) by the second processing station (150), and
d. a second pusher (170) for pushing the pineapple (P) on a second horizontal plane arranged below the first horizontal plane into the third processing station (160).

9. The machine (100) according to claim 8,
a. wherein the machine (100) comprises a first horizontal shutter,
b. wherein the first pusher (140) is arranged for pushing the pineapple (P) on the first horizontal plane onto the first horizontal shutter,
c. wherein the first horizontal shutter is arranged for dropping the pineapple (P) from the first horizontal plane onto the second horizontal plane by opening the first horizontal shutter.

10. The machine (100) according to claim 8 or 9,
a. wherein the top knife (111) is arranged vertically above the bottom knife (112),
b. wherein a vertical height of the first pusher (140) is smaller than a vertical height of the second pusher (170).

11. The machine (100) according to one of claims 8 to 10,
wherein the machine (100) comprises a common pusher drive for driving the first pusher (140) and the second pusher (170).

12. A method for automatically preparing a whole pineapple (P) for consumption at a pineapple point of sale using a machine (100) according to one of claims 1 to 11, the method comprising the following steps:
a. measuring a length of the pineapple (P) along the longitudinal axis of the pineapple (P) using the length measuring device (120) of the machine (100), wherein measuring the length comprises measuring the length using at least one optical sensor (122) and/or measuring a mass of the pineapple (P) using a mass sensor (121);
b. automatically adjusting the distance between the top knife (111) and the bottom knife (112) of the first processing station (110) of the machine (100) depending on the measured length of the pineapple (P) using the adjustment device (130) of the machine;
c. removing a top end of the pineapple (P) using the top knife (111) and removing a bottom end of the pineapple (P) using the bottom knife (112).

13. The method according to claim 12, wherein the machine (100) comprises an adjustment motor (131) for adjusting the distance between the top knife (111) and the bottom knife (112) and a controller connected to the measuring device (120) and to the adjustment motor (131),
a. wherein the step of measuring the length of the pineapple (P) comprises the controller measuring the length using the measuring device (120),
b. wherein the step of automatically adjusting the distance comprises the controller adjusting the distance using the adjustment motor (131) depending on the length of the pineapple (P).

14. The method according to claim 13, wherein the length measuring device (130) comprises an optical sensor (122) having a line of sight (123);
a. the method comprising a step of the controller controlling a first pusher (140) for pushing the pineapple (P) across the line of sight (123) in a pushing direction perpendicular to the longitudinal axis of the pineapple (P) and perpendicular to the line of sight (123),
b. the step of measuring the length of the pineapple (P) comprising the controller calculating the length of the pineapple (P) from a position of the first pusher (140) when the at least one optical sensor (122) starts detecting the pineapple (P) within its line of sight (123).

15. The method according to one of claims 13 to 14, wherein the length measuring device (120) comprises a mass sensor (121); wherein the mass sensor (121) comprises an electronic mass sensor;
a. the step of measuring the length of the pineapple (P) comprising the controller measuring the mass of the pineapple (P) using the electronic mass sensor;
b. the step of measuring the length of the pineapple (P) comprising the controller calculating the length of the pineapple (P) from the mass of the pineapple (P).

## Patentansprüche

1. Maschine (100) zum automatischen Vorbereiten einer ganzen Ananas (P) zum Verzehr an einem Ananas-Verkaufsort, die Maschine (100) umfassend
a. eine erste Verarbeitungsstation (110) mit einem oberen Messer (111) zum Entfernen eines oberen Endes der Ananas (P) und einem unteren Messer (112) zum Entfernen eines unteren Endes der Ananas (P), wobei das obere Messer (111) und das untere Messer (112) parallele Schnittrichtungen und parallele Schnittebenen aufweisen, und das obere Messer (111) in einem senkrecht zu den Schnittebenen gemessenen Abstand von dem unteren Messer (112) angeordnet ist;
b. eine Längenmessvorrichtung (120) zum Messen einer Länge der Ananas (P) entlang einer Längsachse der Ananas (P); und
c. eine Einstellvorrichtung (130) zum automatischen Einstellen des Abstands zwischen dem oberen Messer (111) und dem unteren Messer (112) abhängig von der von der Längenmessvorrichtung (120) gemessenen Länge der Ananas (P);
**dadurch gekennzeichnet, dass**
d. die Längenmessvorrichtung (120) mindestens einen optischen Sensor (122) zum Messen der Länge der Ananas (P) und/oder einen Massesensor (121) zum Messen einer Masse der Ananas (P) umfasst.

2. Maschine (100) gemäß Anspruch 1,
die Einstellvorrichtung (130) umfassend
a. einen Einstellmotor (131) zum Einstellen des Abstands zwischen dem oberen Messer (111) und dem unteren Messer (112); und
b. eine Steuerung, wobei die Steuerung mit der Längenmessvorrichtung (120) und mit dem Einstellmotor (131) verbunden ist, um den Abstand mit dem Einstellmotor (131) abhängig von der Länge der Ananas (P) einzustellen.

3. Maschine (100) gemäß Anspruch 2,
a. wobei die Längenmessvorrichtung (120) mindestens einen optischen Sensor (122) mit einer Sichtlinie (123) umfasst;
b. wobei die Maschine (100) einen ersten Schieber (140) zum Schieben der Ananas (P) über die Sichtlinie (123) in einer Schubrichtung senkrecht zur Längsachse der Ananas (P) umfasst;
c. wobei die Sichtlinie (123) senkrecht zur Schubrichtung und zur Längsachse der Ananas (P) ausgerichtet ist;
d. wobei die Steuerung so programmiert ist, dass sie den ersten Schieber (140) steuert und die Länge der Ananas (P) aus einer Position des ersten Schiebers (140) berechnet, wenn der mindestens eine optische Sensor (122) beginnt, die Ananas (P) innerhalb seiner Sichtlinie (123) zu erfassen.

4. Maschine (100) gemäß Anspruch 3,
wobei der mindestens eine optische Sensor (122)
a. eine Vielzahl von optischen Sensoren (122) umfasst, die auf einer parallelen Sensorachse parallel zur Längsachse der Ananas (P) verteilt sind, wobei die Steuerung so programmiert ist, dass sie die Länge der Ananas (P) aus einer Vielzahl von Positionen des ersten Schiebers (140) berechnet, wenn die Vielzahl von optischen Sensoren (122) beginnen, die Ananas (P) innerhalb ihrer Vielzahl von Sichtlinien (123) zu erfassen; und/oder
b. einen Sensorantrieb zum Bewegen des mindestens einen optischen Sensors (122) entlang einer parallelen Sensorachse parallel zur Längsachse der Ananas (P) umfasst, wobei die Steuerung so programmiert ist, dass sie den Sensorantrieb steuert und die Länge der Ananas (P) aus einer Position des ersten Schiebers (140) und aus Positionen des mindestens einen optischen Sensors (122) berechnet, wenn der mindestens eine optische Sensor (122) beginnt und aufhört, die Ananas (P) innerhalb seiner Sichtlinie (123) zu erfassen.

5. Maschine (100) gemäß einem der Ansprüche 2 bis 4, wobei die Längenmessvorrichtung (120) mindestens einen optischen Sensor (122) umfasst;
a. wobei der mindestens eine optische Sensor (122) einen Sensorantrieb zum Bewegen des mindestens einen optischen Sensors (122) entlang einer orthogonalen Sensorachse orthogonal zur Längsachse der Ananas (P) und/oder zum Drehen des mindestens einen optischen Sensors (122) um eine parallele Sensorachse parallel zur Längsachse der Ananas (P) zu drehen, wobei die Steuerung so programmiert ist, dass sie den Sensorantrieb steuert und die Länge der Ananas (P) aus einer von dem mindestens einen optischen Sensor (122) aufgezeichneten Zeilenabtastung der Ananas (P) berechnet; und/oder
b. wobei der mindestens eine optische Sensor (122) eine Vielzahl von optischen Sensoren (122) umfasst, die auf einer orthogonalen Sensorachse orthogonal zur Längsachse der Ananas (P) verteilt sind, wobei die Steuerung so programmiert ist, dass sie die Länge der Ananas (P) aus einer von der Vielzahl von optischen Sensoren (122) aufgezeichneten Zeilenabtastung der Ananas (P) berechnet.

6. Maschine (100) gemäß einem der Ansprüche 2 bis 5,
a. wobei die Längenmessvorrichtung (120) einen Massensensor (121) umfasst;
b. wobei der Massensensor (121) einen elektronischen Massensensor zum Messen der Masse der Ananas (P) umfasst,
c. wobei die Steuerung so programmiert ist, dass sie die Länge der Ananas (P) aus der Masse der Ananas (P) berechnet.

7. Maschine (100) gemäß einem der Ansprüche 1 bis 6,
a. wobei die Längenmessvorrichtung (120) einen Massensensor (121) umfasst;
b. wobei der Massensensor (121) ein Tragelement (124) zum Tragen der Ananas (P) mit vertikal ausgerichteter Längsachse umfasst,
c. wobei das Tragelement (124) von mindestens einem Federelement getragen wird,
d. wobei das mindestens eine Federelement durch das auf das Tragelement (124) wirkende Gewicht der Ananas (P) in vertikaler Richtung elastisch verformbar ist,
e. wobei das untere Messer (112) an dem Tragelement (124) befestigt ist,
f. wobei das obere Messer (111) vertikal über dem unteren Messer (112) angeordnet ist.

8. Maschine (100) nach einem der Ansprüche 1 bis 7, die Maschine (100) umfassend
a. eine zweite Bearbeitungsstation (150) zum Entfernen eines Kerns und/oder einer Schale der Ananas (P) nach dem Entfernen des oberen Endes und des unteren Endes der Ananas (P) durch die erste Bearbeitungsstation (110),
b. einen ersten Schieber (140) zum Schieben der Ananas (P) auf einer ersten horizontalen Ebene durch die erste Bearbeitungsstation (110),
c. eine dritte Verarbeitungsstation (160) zum Schneiden der Ananas (P) in eine Vielzahl von Scheiben orthogonal zur Längsachse der Ananas (P) und/oder in eine Vielzahl von Segmenten entlang der Längsachse nach dem Entfernen des Kerns und/oder der Schale der Ananas (P) durch die zweite Verarbeitungsstation (150), und
d. einen zweiten Schieber (170) zum Schieben der Ananas (P) auf einer zweiten horizontalen Ebene, die unterhalb der ersten horizontalen Ebene angeordnet ist, in die dritte Bearbeitungsstation (160).

9. Maschine (100) gemäß Anspruch 8,
a. wobei die Maschine (100) einen ersten horizontalen Klappe umfasst,
b. wobei der erste Schieber (140) dazu ausgelegt ist, die Ananas (P) auf der ersten horizontalen Ebene auf die ersten horizontale Klappe zu schieben,
c. wobei die erste horizontale Klappe so angeordnet ist, dass sie die Ananas (P) durch Öffnen der ersten horizontalen Klappe von der ersten horizontalen Ebene auf die zweite horizontale Ebene fallen lässt.

10. Maschine (100) gemäß Anspruch 8 oder 9,
a. wobei das obere Messer (111) vertikal über dem unteren Messer (112) angeordnet ist,
b. wobei eine vertikale Höhe des ersten Schiebers (140) kleiner ist als eine vertikale Höhe des zweiten Schiebers (170).

11. Maschine (100) gemäß einem der Ansprüche 8 bis 10,
wobei die Maschine (100) einen gemeinsamen Schieberantrieb zum Antreiben des ersten Schiebers (140) und des zweiten Schiebers (170) umfasst.

12. Verfahren zur automatischen Vorbereitung einer ganzen Ananas (P) zum Verzehr an einem Ananas-Verkaufsort mit einer Maschine (100) gemäß einem der Ansprüche 1 bis 11, das Verfahren umfassend die folgenden Schritte:
a. Messen einer Länge der Ananas (P) entlang der Längsachse der Ananas (P) mit der Längenmessvorrichtung (120) der Maschine (100), wobei das Messen der Länge mit mindestens einem optischen Sensor (122) erfolgt, und/oder ein Messen einer Masse der Ananas (P) mit einem Massensensor (121) umfasst;
b. automatisches Einstellen des Abstands zwischen dem oberen Messer (111) und dem unteren Messer (112) der ersten Verarbeitungsstation (110) der Maschine (100) abhängig von der gemessenen Länge der Ananas (P) mit der Einstellvorrichtung (130) der Maschine;
c. Entfernen eines oberen Endes der Ananas (P) mit dem oberen Messer (111) und Entfernen eines unteren Endes der Ananas (P) mit dem unteren Messer (112).

13. Verfahren nach Anspruch 12, wobei die Maschine (100) einen Einstellmotor (131) zum Einstellen des Abstands zwischen dem oberen Messer (111) und dem unteren Messer (112) und eine mit der Längenmessvorrichtung (120) und mit dem Einstellmotor (131) verbundene Steuerung umfasst,
a. wobei das Messen der Länge der Ananas (P) umfasst, dass die Steuerung die Länge mit der Längenmessvorrichtung (120) misst,
b. wobei das automatische Einstellen des Abstands umfasst, dass die Steuerung den Abstand mit dem Einstellmotor (131) abhängig von der Länge der Ananas (P) einstellt.

14. Verfahren nach Anspruch 13, wobei die Längenmessvorrichtung (120) einen optischen Sensor (122) mit einer Sichtlinie (123) umfasst;
a. wobei das Verfahren ein Steuern eines ersten Schiebers (140) der Maschine (100) durch die Steuerung umfasst, um die Ananas (P) in einer Schubrichtung senkrecht zur Längsachse der Ananas (P) und senkrecht zur Sichtlinie (123) über die Sichtlinie (123) zu schieben;
b. wobei das Messen der Länge der Ananas (P) umfasst, dass die Steuerung die Länge der Ananas (P) aus einer Position des ersten Schiebers (140) berechnet, wenn der mindestens eine optische Sensor (122) beginnt, die Ananas (P) in seiner Sichtlinie (123) zu erfassen.

15. Verfahren nach einem der Ansprüche 13 bis 14, wobei die Längenmessvorrichtung (120) einen Massesensor (121) umfasst; wobei der Massesensor (121) einen elektronischen Massesensor umfasst;
a. wobei das Messen der Länge der Ananas (P) umfasst, dass die Steuerung die Masse der Ananas (P) unter Verwendung des elektronischen Massensensors misst;
b. wobei das Messen der Länge der Ananas (P) umfasst, dass die Steuerung die Länge der Ananas (P) aus der Masse der Ananas (P) berechnet.

## Revendications

1. Machine (100) pour préparer automatiquement un ananas entier (P) pour sa consommation à un point de vente d'ananas, la machine (100) comprenant
a. une première station de traitement (110) comportant un couteau supérieur (111) pour retirer l'extrémité supérieure de l'ananas (P) et un couteau inférieur (112) pour retirer l'extrémité inférieure de l'ananas (P), le couteau supérieur (111) et le couteau inférieur (112) ayant des directions de coupe parallèles et des plans de coupe parallèles, et le couteau supérieur (111) étant disposé à une distance mesurée perpendiculairement aux plans de coupe du couteau inférieur (112) ;
b. un dispositif de mesure de longueur (120) pour mesurer une longueur de l'ananas (P) le long d'un axe longitudinal de l'ananas (P) ; et
c. un dispositif de réglage (130) pour régler automatiquement la distance entre le couteau supérieur (111) et le couteau inférieur (112) en fonction de la longueur de l'ananas (P) mesurée par le dispositif de mesure de longueur (120) ;
**caractérisé en ce que**
d. le dispositif de mesure de longueur (120) comprend au moins un capteur optique (122) pour mesurer la longueur de l'ananas (P) et/ou un capteur de masse (121) pour mesurer la masse de l'ananas (P).

2. Machine (100) selon la revendication 1,
le dispositif de réglage (130) comprenant
a. un moteur de réglage (131) pour régler la distance entre le couteau supérieur (111) et le couteau inférieur (112) ; et
b. un contrôleur, le contrôleur étant connecté au dispositif de mesure (120) et au moteur de réglage (131) pour régler la distance à l'aide du moteur de réglage (131) en fonction de la longueur de l'ananas (P).

3. Machine (100) selon la revendication 2,
a. le dispositif de mesure de longueur (120) comprenant au moins un capteur optique (122) ayant une ligne de visée (123) ;
b. la machine (100) comprenant un premier poussoir (140) pour pousser l'ananas (P) à travers la ligne de visée (123) dans une direction de poussée perpendiculaire à l'axe longitudinal de l'ananas (P) ;
c. la ligne de visée (123) étant orientée perpendiculairement à la direction de poussée et à l'axe longitudinal de l'ananas (P) ;
d. le contrôleur étant programmé pour contrôler le premier poussoir (140) et pour calculer la longueur de l'ananas (P) à partir d'une position du premier poussoir (140) lorsque ledit au moins un capteur optique (122) commence à détecter l'ananas (P) dans sa ligne de visée (123).

4. Machine (100) selon la revendication 3,
ledit au moins un capteur optique (122)
a. comprenant une pluralité de capteurs optiques (122) répartis sur un axe de capteur parallèle, parallèle à l'axe longitudinal de l'ananas (P), le contrôleur étant programmé pour calculer la longueur de l'ananas (P) à partir d'une pluralité de positions du premier poussoir (140) lorsque la pluralité de capteurs optiques (122) commencent à détecter l'ananas (P) dans leur pluralité de lignes de visée (123) ; et/ou
b. comprenant un entraînement de capteur pour déplacer ledit au moins un capteur optique (122) le long d'un axe de capteur parallèle, parallèle à l'axe longitudinal de l'ananas (P), le contrôleur étant programmé pour commander l'entraînement de capteur et pour calculer la longueur de l'ananas (P) à partir d'une position du premier poussoir (140) et à partir des positions dudit au moins un capteur optique (122) lorsque ledit au moins un capteur optique (122) commence et arrête de détecter l'ananas (P) dans sa ligne de visée (123).

5. Machine (100) selon l'une des revendications 2 à 4, le dispositif de mesure de longueur (120) comprenant au moins un capteur optique (122) ;
a. ledit au moins un capteur optique (122) comprenant un entraînement de capteur pour déplacer ledit au moins un capteur optique (122) le long d'un axe de capteur orthogonal, orthogonal à l'axe longitudinal de l'ananas (P) et/ou pour faire tourner ledit au moins un capteur optique (122) autour d'un axe de capteur parallèle, parallèle à l'axe longitudinal de l'ananas (P), le contrôleur étant programmé pour commander l'entraînement du capteur et pour calculer la longueur de l'ananas (P) à partir d'un balayage linéaire de l'ananas (P) enregistré par ledit au moins un capteur optique (122) ; et/ou
b. ledit au moins un capteur optique (122) comprenant une pluralité de capteurs optiques (122) répartis sur un axe de capteur orthogonal, orthogonal à l'axe longitudinal de l'ananas (P), le contrôleur étant programmé pour calculer la longueur de l'ananas (P) à partir d'un balayage linéaire de l'ananas (P) enregistré par la pluralité de capteurs optiques (122).

6. Machine (100) selon l'une des revendications 2 à 5,
a. le dispositif de mesure de longueur (120) comprenant un capteur de masse (121) ;
b. le capteur de masse (121) comprenant un capteur de masse électronique pour mesurer la masse de l'ananas (P),
c. le contrôleur étant programmé pour calculer la longueur de l'ananas (P) à partir de la masse de l'ananas (P).

7. Machine (100) selon l'une des revendications 1 à 6,
a. le dispositif de mesure de longueur (120) comprenant un capteur de masse (121) ;
b. le capteur de masse (121) comprenant un élément de support (124) pour supporter l'ananas (P) avec son axe longitudinal orienté verticalement,
c. l'élément de support (124) étant porté par au moins un élément ressort,
d. ledit au moins un élément ressort étant élastiquement déformable dans une direction verticale par un poids de l'ananas (P) agissant sur l'élément de support (124),
e. le couteau inférieur (112) étant fixé à l'élément de support (124),
f. le couteau supérieur (111) étant disposé verticalement au-dessus du couteau inférieur (112).

8. Machine (100) selon l'une des revendications 1 à 7, la machine (100) comprenant
a. une deuxième station de traitement (150) pour retirer le cœur et/ou la peau de l'ananas (P) après le retrait des extrémités supérieure et inférieure de l'ananas (P) par la première station de traitement (110),
b. un premier poussoir (140) pour pousser l'ananas (P) sur un premier plan horizontal à travers la première station de traitement (110),
c. une troisième station de traitement (160) pour couper l'ananas (P) en une pluralité de tranches orthogonalement à l'axe longitudinal de l'ananas (P) et/ou en une pluralité de segments le long de l'axe longitudinal après le retrait du cœur et/ou de la peau de l'ananas (P) par la deuxième station de traitement (150), et
d. un deuxième poussoir (170) pour pousser l'ananas (P) sur un deuxième plan horizontal disposé sous le premier plan horizontal dans la troisième station de traitement (160).

9. Machine (100) selon la revendication 8,
a. la machine (100) comprenant un premier clapet horizontal,
b. le premier poussoir (140) étant agencé pour pousser l'ananas (P) sur le premier plan horizontal sur le premier clapet horizontal,
c. le premier clapet horizontal étant agencé pour faire tomber l'ananas (P) du premier plan horizontal sur le deuxième plan horizontal en ouvrant le premier clapet horizontal.

10. Machine (100) selon la revendication 8 ou 9,
a. le couteau supérieur (111) étant disposé verticalement au-dessus du couteau inférieur (112),
b. une hauteur verticale du premier poussoir (140) étant inférieure à une hauteur verticale du deuxième poussoir (170).

11. Machine (100) selon l'une des revendications 8 à 10,
la machine (100) comprenant un entraînement de poussoir commun pour entraîner le premier poussoir (140) et le deuxième poussoir (170).

12. Procédé pour préparer automatiquement un ananas entier (P) pour sa consommation à un point de vente d'ananas à l'aide d'une machine (100) selon l'une des revendications 1 à 11, le procédé comprenant les étapes suivantes :
a. mesurer une longueur de l'ananas (P) le long de l'axe longitudinal de l'ananas (P) à l'aide du dispositif de mesure de longueur (120) de la machine (100), mesurer la longueur comprenant mesurer la longueur à l'aide d'au moins un capteur optique (122) et/ou mesurer une masse de l'ananas (P) à l'aide d'un capteur de masse (121) ;
b. ajuster automatiquement la distance entre le couteau supérieur (111) et le couteau inférieur (112) de la première station de traitement (110) de la machine (100) en fonction de la longueur mesurée de l'ananas (P) à l'aide du dispositif de réglage (130) de la machine ;
c. retirer l'extrémité supérieure de l'ananas (P) à l'aide du couteau supérieur (111) et retirer l'extrémité inférieure de l'ananas (P) à l'aide du couteau inférieur (112).

13. Procédé selon la revendication 12, la machine (100) comprenant un moteur de réglage (131) pour régler la distance entre le couteau supérieur (111) et le couteau inférieur (112) et un contrôleur connecté au dispositif de mesure (120) et au moteur de réglage (131),
a. l'étape de mesurer la longueur de l'ananas (P) comprenant le contrôleur mesurant la longueur à l'aide du dispositif de mesure de longueur (120),
b. l'étape d'ajuster automatiquement la distance comprenant le contrôleur ajustant la distance à l'aide du moteur d'ajustement (131) en fonction de la longueur de l'ananas (P).

14. Procédé selon la revendication 13, le dispositif de mesure de longueur (120) comprenant un capteur optique (122) ayant une ligne de visée (123) ;
a. le procédé comprenant une étape de commander un premier poussoir (140) de la machine (100) par le contrôleur pour pousser l'ananas (P) à travers la ligne de visée (123) dans une direction de poussée perpendiculaire à l'axe longitudinal de l'ananas (P) et perpendiculaire à la ligne de visée (123) ;
b. l'étape de mesurer la longueur de l'ananas (P) comprenant le contrôleur calculer la longueur de l'ananas (P) à partir d'une position du premier poussoir (140) lorsque ledit au moins un capteur optique (122) commence à détecter l'ananas (P) dans sa ligne de visée (123) .

15. Procédé selon l'une des revendications 13 à 14, le dispositif de mesure de longueur (120) comprenant un capteur de masse (121) ; le capteur de masse (121) comprenant un capteur de masse électronique ;
a. l'étape de mesurer la longueur de l'ananas (P) comprenant le contrôleur mesurer la masse de l'ananas (P) à l'aide du capteur de masse électronique ;
b. l'étape de mesurer la longueur de l'ananas (P) comprenant le contrôleur calculer la longueur de l'ananas (P) à partir de la masse de l'ananas (P).
